(19) **Europäisches Patentamt**

**European Patent Office**

**Office européen des brevets**

(11) Veröffentlichungsnummer: **0 301 060**
**B1**

(12) **EUROPÄISCHE PATENTSCHRIFT**

(45) Veröffentlichungstag der Patentschrift: **29.08.90**

(21) Anmeldenummer: **88901548.3**

(22) Anmeldetag: **12.02.88**

(86) Internationale Anmeldenummer:
**PCT/DE88/00066**

(87) Internationale Veröffentlichungsnummer:
**WO 88/06209 25.08.88 Gazette 88/19**

(51) Int. Cl.⁵: **E 02 D 31/00,** B 09 B 5/00,
E 21 B 43/00

(54) **VORRICHTUNG ZUR ERSCHLIESSUNG VON MÜLLDEPONIEGASQUELLEN UND ZUR ERKUNDUNG UND SANIERUNG VON ALTLASTEN UND VERUNREINIGTEN BÖDEN.**

(30) Priorität: **13.02.87 DE 3704481**

(43) Veröffentlichungstag der Anmeldung:
**01.02.89 Patentblatt 89/05**

(45) Bekanntmachung des Hinweises auf die
Patenterteilung:
**29.08.90 Patentblatt 90/35**

(84) Benannte Vertragsstaaten:
**AT BE CH DE FR GB IT LI LU NL SE**

(56) Entgegenhaltungen:
**DE-A-2 655 541
DE-A-3 131 100
US-A-4 026 355
US-A-4 089 374
US-A-4 483 396
US-A-4 545 731
US-A-45 894 94**

(73) Patentinhaber: **HOLSTEINER GAS-
GESELLSCHAFT M.B.H.
Kaiser-Wilhelm-Strasse 115
D-2000 Hamburg 36 (DE)**

(72) Erfinder: **LOOCK, Rudolf
Kaiser-Wilhelm-Stra e 115
D-2000 Hamburg 36 (DE)**
Erfinder: **JEBENS, Claus
Liebigstra e 28
D-2000 Hamburg 74 (DE)**

(74) Vertreter: **Richter, Werdermann & Gerbaulet
Neuer Wall 10
D-2000 Hamburg 36 (DE)**

**Beschreibung**

Die Erfindung bezieht sich auf eine Vorrichtung zur Erschließung von Mülldeponiegasquellen und zur Erkundung und Sanierung von Altlasten und verunreinigten Böden mit einer beispielsweise in die gasführende Zone der Deponie einführbaren hohlzylindrischen Sonde, welche als Gaseintrittsöffnungen dienende seitliche Wanddurchbrechungen sowie eine Gasabführungsleitung aufweist und deren Durchmesser größer als der Durchmesser der koaxial und lösbar damit verbundenen Gasabführungsleitung ist.

Eine derartige Vorrichtung ist überall dort einsetzbar, wo Mülldeponien, Deponien, Altlasten und Böden entgast, gereinigt, saniert oder überprüft werden sollen.

Bei bisher bekannten Vorrichtungen dieser Art bestand die Sonde aus einem Rohr oder Schlauch aus Kunststoff, das bzw. der in seinem zum Eindringen in die gasführende Zone bestimmten Abschnitt mit Wanddurchbrechungen versehen war und im übrigen zugleich als Gasabführungsleitung diente. Um eine solche Sonde in die Deponie einzuführen, wurde zunächst durch Aufgraben oder Aufbohren des Deponiematerials ein Schacht in diesem hergestellt, in den die Sonde eingesteckt wurde, worauf die Zwischenräume zwischen Schacht und Sonde im gasführenden Bereich mit einer gasdurchlässigen Schüttung von Kieselsteinen und darüber mit dichterem Material aufgefüllt wurden. Die Herstellung des Schachtes war nur mit einer erheblichen Störung der Struktur des ruhenden Deponiematerials möglich. Ferner waren Verstopfungen der Sonden durch Schlamm oder Feststoffe nicht zu beheben. Auch konnte weder der Stand in die Sonde eingedrungenen Wassers kontrolliert noch dieses durch Abpumpen beseitigt werden.

Eine aus der US-PS 4,483,396 bekannte Sonde besteht aus einem in die gasführende Zone einer Deponie einführbaren hohlzylindrischen Sondenkörper mit seitlichen Wanddurchbrechungen, wobei an dem Sondenkörper ein Rohr zur Gasabführung anschließbar ist, das im Durchmesser kleiner bemessen ist als der Durchmesser des Sondenkörpers.

Durch die DE-A-26 55 541 ist es bekannt, daß Rohre bei der Brunnenbohrung, bei der Einbringung von Pfählen od. dgl. durch Einrammen in den Boden getrieben werden können.

Durch die Erfindung soll eine Vorrichtung der eingangs genannten Art so weitergebildet werden, daß sie möglichst ohne Störung der Struktur des Deponiematerials in dieses einbringbar ist und zugleich einen als Gassammel- und Kontrollraum geeigneten Hohlraum darin bildet. Gleichzeitig soll die Sonde als Hauptelement eines Systems zur Erkundung und Sanierung von Altlasten bzw. verunreinigten Böden ausgebildet sein.

Zur Lösung dieser Aufgabe wird bei einer Vorrichtung der eingangs genannten Art vorgesehen, daß die Vorrichtung einen in die Deponie- oder Bodenoberfläche einzurammenden starren Sondenkörper in Form eines hohlzylindrischen Stahlbehälters aufweist, dessen Mantelwand mit den Wanddurchbrechungen versehen ist und daß der hohlzylindrische Stahlbehälter an einem unteren Ende von einer über seine Mantelwand radial vorstehenden, stirnseitig an diese angeschweißten Bodenplatte und innerhalb des oberen Endes des seine Mantelwand bildenden Rohrstücks von einer in dieses eingeschweißten Deckelplatte begrenzt ist, und daß die Deckelplatte mit einem zentrischen Rohrstutzen zum Anschluß der Gasabführungsleitung versehen ist.

Eine Vorrichtung mit einem Sondenkörper, wie mit der Erfindung vorgeschlagen, läßt sich durch Einrammen, d.h. ohne Ausschachtungsarbeiten in das ruhende Deponiematerial einführen. Dieses wird dabei zwar stellenweise mehr oder weniger verdichtet, jedoch wird durch die Aufreißerknaggen diese Verdichtung weitgehend aufgehoben und dadurch seine Struktur in der Umgebung der Rammstelle nur relativ wenig beeinträchtigt. Der den Sondenkörper bildende hohlzylindrische Stahlbehälter, dessen Mantelwand mit den als Gaseinführungsöffnungen dienenden Wanddurchbrechungen versehen ist, bildet mit seinem Inneren nach dem Einrammen in die Deponie einen gegen die Außenluft im wesentlichen abgeschlossenen Hohlraum innerhalb der Deponie, der einerseits als Gassammelraum und andererseits als über die Gasabführungsleitung zugänglicher Kontrollraum geeignet ist. Der nach dem Einrammen neben der Gasabführungsleitung verbleibende schachtähnliche Raum ist verhältnismäßig schmal und kann mit dichtem Bodenmaterial, wie Lehm od. dgl., aufgefüllt werden. Die Gasabführungsleitung kann, wenngleich ihr Durchmesser kleiner ist als derjenige des Sondenkörpers, so weit bemessen werden, daß durch sie hindurch beispielsweise ein Tauchstab zur Messung des Wasserstandes, ein Werkzeug zum Reinigen von etwa verstopften Gaseintrittsöffnungen oder eine Schlauchleitung zum Abpumpen von Schlamm und Wasser in den Kontrollraum eingeführt werden kann; auch können im Bedarfsfall eine optische Überwachungseinrichtung nach Art eines Endoskops oder Mittel zur Förderung des Gasbildungsprozesses durch die Gasabführungsleitung hindurch in den Kontrollraum eingebracht werden.

Mittels einer Vorrichtung gemäß der Erfindung wird eine besonders wirtschaftliche, Gasverluste auf ein Mindestmaß beschränkende und damit auch die Umwelt schonende Erschließung von Mülldeponiegasquellen möglich.

Gemäß einer weiteren in Anspruch 8 gekennzeichneten Ausführungsform ist vorgesehen, daß oberhalb der Deckelplatte eine weitere Deckelplatte angeordnet wird, zwischen denen sich ein Arbeitsraum befindet. Durch Einsprühen eines oder mehrerer die Gasbildung fördernder Medien in den Arbeitsraum ist es möglich, dieses Medium dem die Sonde umgebenden Deponiematerial zuzuführen und dieses zu impfen, um den Gasbildungsprozeß auszulösen, zu fördern und/oder zu steuern. Damit kann einerseits erreicht werden, daß die Gasausbeute zu Beginn der Erschließung erhöht wird, andererseits wird auch eine gleichmäßigere Gasausbeute über die Zeit erreicht, die auch dann noch zu einer Gasförderung führt, wenn das unbehandelte Deponiematerial üblicherweise nur noch eine geringe Gasausbeute ermöglicht.

Gemäß einer anderen vorteilhaften Weiterbildung der Erfindung ist vorgesehen, daß der hohlzylindrische Stahlbehälter eine Wasserabführungsleitung aufweist, wobei vorgesehen sein kann, daß die Deckelplatte mit einem Rohrstutzen zum Anschluß der Wasserabführungsleitung versehen ist, wobei der Rohrstutzen das obere freie Ende eines durch die Deckelplatte und durch die Deckelplatte hindurchgeführten und bis in den Bereich der unteren Bodenplatte reichenden Steigrohres bildet, wobei das bodenplattenseitige Ende des Steigrohres mit einer Filtereinrichtung versehen ist. Diese Ausbildung der Sonde ermöglicht ihren Einsatz gleichzeitig als Entgasungs- und Entwässerungssonde für die Sanierung von Deponien, Altlasten und verunreinigten Böden. Vorteilhafterweise wird die Sonde mit entsprechenden Vorrichtungen, wie einem Meß- und Kontrollsystem gemäß DE-PS 28 10 687 ausgerüstet. Dabei können auch Systeme für die Zu- und Abführung bzw. Kreislaufführung von flüssigen oder gasförmigen Behandlungssubstanzen auf organischer, anorganischer oder mikrobiologischer Basis vorgesehen werden.

Insbesondere die Kreislaufführung von Behandlungs- und/oder Reinigungssubstanzen ermöglicht eine gefahrlose Sanierung der zu behandelnden Böden und Flächen.

Möglichkeiten zur vorteilhaften weiteren Ausgestaltung einer Vorrichtung nach der Erfindung sind in den Unteransprüchen angegeben.

In der Zeichnung sind Ausführungsbeispiele der Erfindung dargestellt, und zwar zeigt

Fig. 1 den Vorgang des Einbringens eines Sondenkörpers in die gasführende Zone einer Deponie,

Fig. 2 einen Sondenkörper in einer senkrecht geschnittenen Darstellung gemäß Linie II—II in Fig. 3,

Fig. 3 den Sondenkörper in einer senkrecht geschnittenen Darstellung gemäß Linie III—III in Fig. 2,

Fig. 4 den Sondenkörper in einem Horizontalschnitt gemäß Linie A—A in Fig. 3,

Fig. 5 den Sondenkörper in einem Horizontalschnitt gemäß Linie B—B in Fig. 2,

Fig. 6 den Sondenkörper in einem Horizontalschnitt gemäß Linie C—C in Fig. 3,

Fig. 7 den Sondenkörper in einem Horizontalschnitt gemäß Linie D—D in Fig. 2,

Fig. 8 eine weitere Ausführungsform eines Sondenkörpers in einer senkrecht geschnittenen Darstellung.

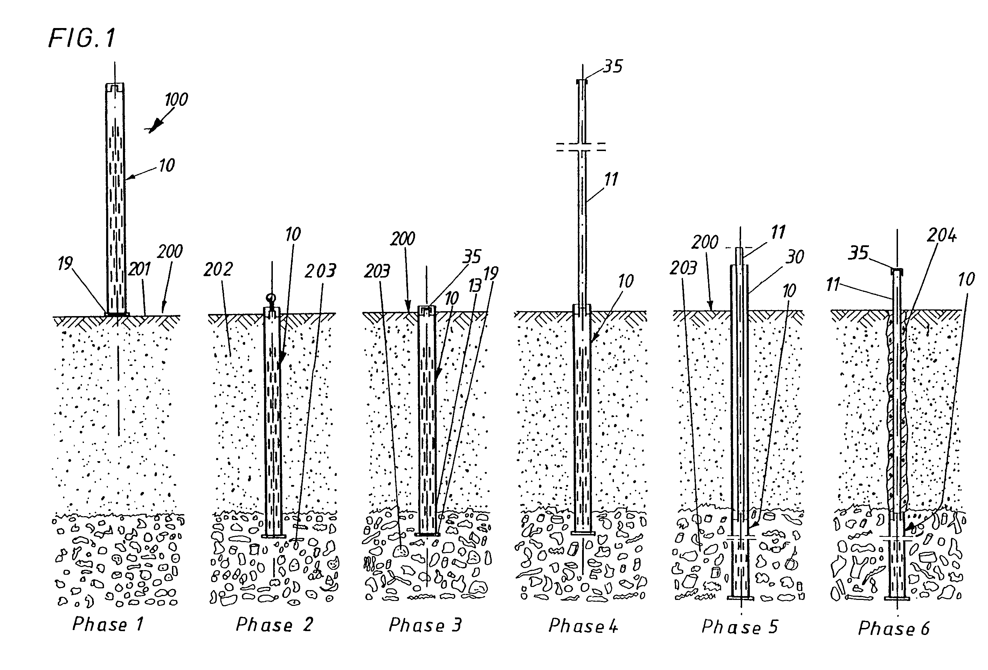

In Fig. 1 ist die mit 100 bezeichnete Vorrichtung in den verschiedenen Phasen 1—6 dargestellt. In Phase 1 befindet sich der Stahlbehälter 10 mit den daran angeordneten Aufreißerknaggen 19 auf der Oberfläche 201 der Deponie 200. Der Stahlbehälter 10 wird dann in Phase 2 durch Einrammen durch die Deckschicht 202 der Deponie bis in den Bereich der potentiell gasführenden Schichten 203 geführt.

In Phase 3 kann dann aus der Schicht 203 durch die Durchbrechungen 13 Gas in den Stahlbehälter 10 eintreten. Dabei ist der Stahlbehälter 10 gegen einen unbeabsichtigten Austritt des gesammelten Gases durch den Deckel 35 geschützt. Sofern in Phase 3 kein Gas gesammelt werden kann oder sich aus sonstigen Gegebenheiten und/oder Feststellungen ableiten läßt, daß eine Gasausbeute nicht möglich oder nicht zu erwarten ist, kann der Stahlbehälter 10 über eine in Fig. 1 nicht dargestellte Ziehvorrichtung wieder aus der Deponie 200 entfernt werden. Die mit dem Stahlkörper 10 nicht fest verbundenen Aufreißerknaggen 19 verbleiben dabei im Material der Deponie 200.

In Phase 4 wird der Stahlkörper 10 mit der Gasabführungsleitung 11 verbunden, die ebenfalls mit dem Deckel 35 verschließbar ist. Für ein tieferes Eindringen des Stahlbehälters 10 in das gasführende Material 203 der Deponie 200 wird auf den Stahlbehälter 10 ein Vortriebsrohr 30 aufgesetzt und mit diesem der Stahlbehälter 10 annähernd vollständig in die Schicht 203 eingebracht werden. Beim Abziehen des Vortriebsrohres 30 entsteht dann zwar kurzzeitig eine Verbindung zwischen der Schicht 203 und der Oberfläche, jedoch wird der um die Gasabführungsleitung 11 verbleibende Hohlraum mit entsprechendem Material 204 verfüllt, so daß ein Verlust nur in ganz geringem Maße auftritt und der anaerobe Gasbildungsvorgang in der Schicht 203 nicht gestört wird (Phase 6). Dieser Gasbildungsprozeß ist dann durch Eindringen eines geeigneten Mediums kontrollierbar und regenerierbar. Außerdem ist durch den Gasabführungsschlauch ein Zugang zum Stahlbehälter 10 gegeben, über den beispielsweise eingedrungenes Wasser und/ oder Verschmutzungen entfernbar sind.

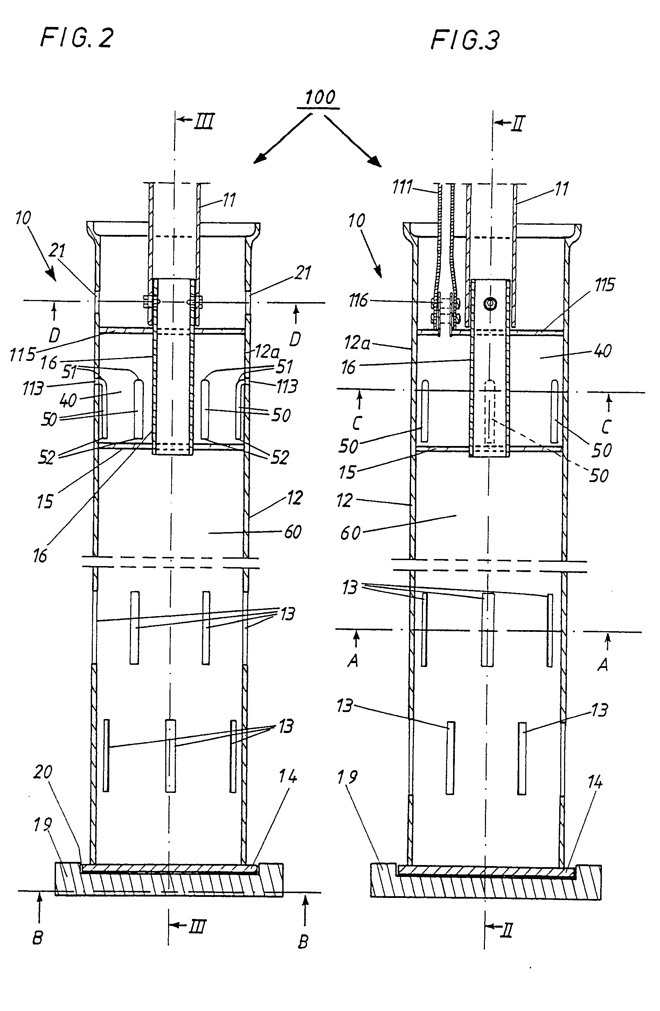

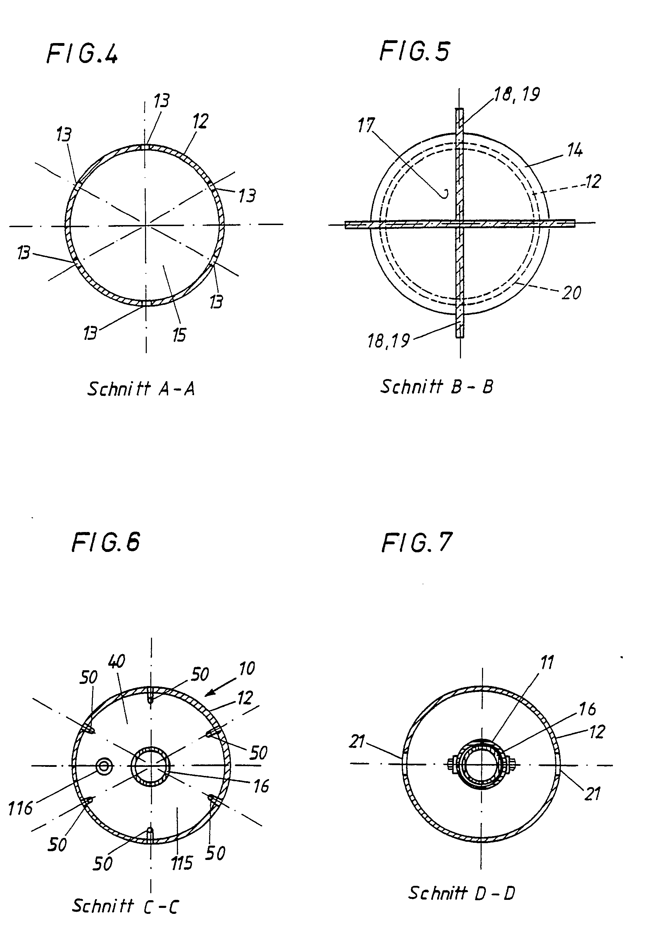

In den Fig. 2—7 ist der Aufbau der Vorrichtung 100 im einzelnen dargestellt, deren Grundkörper von dem Stahlbehälter 10 gebildet wird. Dieser ist hohlzylindrisch ausgebildet und weist in seiner Mantelwand 12 unterhalb der in seinem oberen Ende angeordneten Deckelplatte 15 Wanddurchbrechungen 13 auf, die als Gaseintrittsöffnungen dienen (Fig. 4). An seinem unteren Ende ist der Stahlbehälter 10 von einer stirnseitig angeschweißten Bodenplatte 14 verschlossen, die über seine Mantelwand 12 radial hervorstehend in eine zentrische Führung 20 der Aufreißerknaggen 19 eingreift, die aus einer sternförmigen Anordnung 17 von Flacheisen 18 bestehen (Fig. 5).

Im Bereich 12a oberhalb der Deckelplatte 15 ist innerhalb des Stahlbehälters 10 die weitere Deckelplatte 115 angeordnet, wobei sich zwischen den Deckelplatten 15, 115 der Arbeitsraum 40 befindet. Im Bereich des Arbeitsraumes 40 ist die Mantelwand 12 mit Durchbrechungen 113 versehen, an deren Innenseite diese mit ihrem einen Ende 51 verschließend eine L-förmige Formgebung aufweisende Rohre 50 angeordnet sind. Das untere Ende 52 der Rohre 50 ist bis in den Bereich der Deckelplatte 15 geführt. Über die Druckleitung 111 und den Rohrstutzen 116 ist ein Medium in den Arbeitsraum 40 einbringbar, das über die rohre 50 in den Umgebungsraum der Mantelfläche 12 des Stahlbehälters 10 einbringbar ist (Fig. 6).

Wenn sich nun in dem Innenraum 60 des Stahlbehälters 10 Gas sammelt, gelangt dieses entweder durch eigenen Auftrieb oder durch Absaugen in den Rohrstutzen 16, an dem die Gasabführungsleitung 11 diesen übergreifend fest angeordnet ist (Fig. 7).

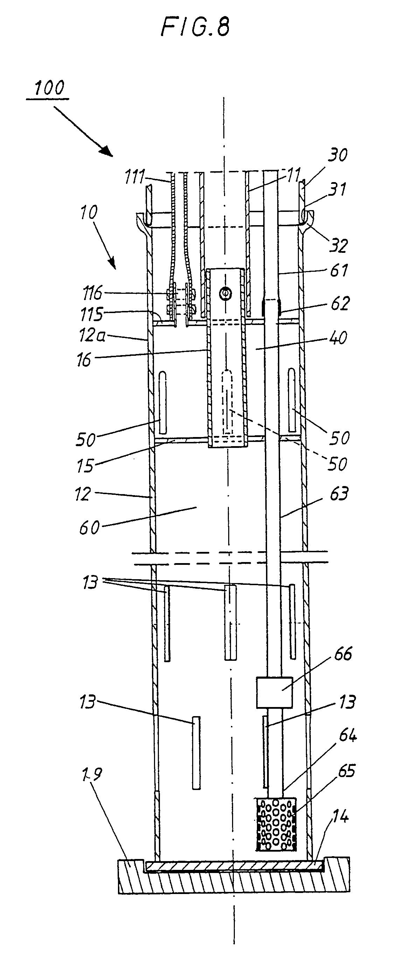

In Fig. 8 ist eine weitere Ausführungsform der Sonde dargestellt. Diese entspricht in ihrem Aufbau dem Aufbau der voranstehend beschriebenen Sonde, so daß hier eine detaillierte Beschreibung entfallen kann. Es ist jedoch bei dieser Sonde zusätzlich eine Wasserabführungsleitung 61 zur Abführung von Flüssigkeiten wie Wasser od. dgl. aus dem Innenraum 60 der Sonde 100 vorgesehen. Diese ist auf einen Rohrstutzen 62 diesen übergreifend fest angeordnet, der das obere freie Ende eines durch den Innenraum 60 der Sonde 100 hindurchgeführten Steigrohres 63 bildet. Das Steigrohr 63 weist. an seinem bodenseitigen Ende 64 eine entsprechende Filtereinrichtung 65 auf, die ein Absaugen von Flüssigkeiten auch bei Materialansammlungen im Innenraum 60 der Sonde 100 ermöglicht. Für das Absaugen bzw. Abpumpen kann in dem Steigrohr 63 eine Pumpeneinrichtung 66 eine Tauchpumpe od. dgl. angeordnet sein.

Die Vorrichtung ist nicht beschränkt auf die voranstehend beschriebenen und beanspruchten Ausführungsformen. So fällt eine andere geometrische Gestaltung des Sondenkörpers ebenso in den Rahmen der Erfindung wie eine andere Ausbildung der Ver- oder Entsorgungseinrichtungen der Sonde. Insbesondere ist es möglich, die Sonde mit Meß- und Kontrollsystemen sowie mit Systemen für die Zu- und Abführung bzw. Kreislaufführung von flüssigen oder gasförmigen Behandlungssubstanzen auf organischer, anorganischer oder mikrobiologischer Basis auszurüsten.

## Patentansprüche

1. Vorrichtung (100) zur Erschließung von Mülldeponiegasquellen und zur Erkundung und Sanierung von Altlasten und verunreinigten Böden mit einer in die gasführende Zone (203) der Deponie (200) einführbaren hohlzylindrischen Sonde, welche als Gaseintrittsöffnungen dienende Wanddurchbrechungen (13) sowie eine Gasabführungsleitung (11) aufweist und deren Durchmesser größer ist als der Durchmesser der koaxial und lösbar damit verbundenen Gasabführungsleitung, dadurch gekennzeichnet, daß die Vorrichtung (100) einen in die Deponie- oder Bodenoberfläche (201) einzurammenden starren Sondenkörper in Form eines hohlzylindrischen Stahlbehälters (10) aufweist, dessen Mantelwand (12) mit den Wanddurchbrechungen (13) versehen ist, und daß der hohlzylindrische Stahlbehälter (10) an einem unteren Ende von einer über seine Mantelwand (12) radial vorstehenden, stirnseitig an diese angeschweißten Bodenplatte (14) und innerhalb des oberen Endes des seine Mantelwand (12) bildenden Rohrstücks von einer in dieses eingeschweißten Deckelplatte (15) begrenzt ist, und daß die Deckelplatte (15) mit einem zentrischen Rohrstutzen (16) zum Anschluß der Gasabführungsleitung (11) versehen ist.

2. Vorrichtung nach Anspruch 1, dadurch gekennzeichnet, daß die Bodenplatte (14) auf eine mit einer zentrischen Führung (20) versehene sternförmige Anordnung (17) von Flacheisen (18), welche Aufreißerknaggen (19) bilden, lösbar aufgesetzt ist.

3. Vorrichtung nach Anspruch 1 oder 2, dadurch gekennzeichnet, daß der zylindrische Stahlbehälter (10) im Bereich des axial über die Deckelplatte (15) vorstehenden Randes (12a) seiner Mantelwand (12) mit zum Angreifen einer Ziehvorrichtung dienenden Löchern (21) versehen ist.

4. Vorrichtung nach einem der Ansprüche 1 bis 3, dadurch gekennzeichnet, daß der hohlzylindrische Stahlbehälter (10) durch ein auf sein oberes Ende aufsetzbares Vortriebsrohr (30) von annähernd gleichem Durchmesser wie der Stahlbehälter (10) verlängerbar ist.

5. Vorrichtung nach Anspruch 4, dadurch gekennzeichnet, daß zwischen dem oberen Ende des Stahlbehälters (10) und dem Vortriebsrohr (30) eine zentrische Führung (31, 32) von solcher Ausbildung vorgesehen ist, daß das Vortriebsrohr (30) beim Einrammen in die Mülldeponie kraftschlüssig mit dem Stahlbehälter (10) verbunden ist, sich aber beim Herausziehen von diesem löst.

6. Vorrichtung nach einem der Ansprüche 1 bis 5, dadurch gekennzeichnet, daß die zu dem Stahlbehälter (10) koaxiale Gasabführungsleitung und/oder der Rohrstutzen (16) aus einem biegesteifen Kunststoffrohr (11) bestehen, wobei das obere Ende des Rohrstutzens (16) mit einem den Gasaustritt im wesentlichen verhindernden Deckel (35) verschließbar ist.

7. Vorrichtung nach einem der Ansprüche 1 bis 6, dadurch gekennzeichnet, daß der zylindrische Stahlbehälter (10) innerhalb des oberen Endes seine Mantelwand (12) bildenden Rohrstücks eine weitere, zur Deckelplatte (15) einen Abstand aufweisende und einen Arbeitsraum (40) begrenzende, unterhalb der Löcher (21) angeordnete Deckelplatte (115) aufweist, durch die der Rohrstutzen ((16) hindurchgeführt ist, wobei in dem Arbeitsraum (40) in der Mantelwand (12) Durchbrechungen (113) ausgebildet sind, an denen im Arbeitsraum (40) diese mit ihrem einen Ende (51) verschließende und eine L-förmige Formgebung aufweisende Rohre (50) angeordnet sind, deren jeweils anderes Ende (52) nach unten gerichtet und bis in den Bereich der Deckelplatte (15) geführt ist, und daß die Deckelplatte (115) mit einem Rohrstutzen (116) zum Anschluß einer Druckleitung (111) versehen ist.

8. Vorrichtung nach einem der Ansprüche 1 bis 7, dadurch gekennzeichnet, daß der hohlzylindrische Stahlbehalter (10) eine Wasserabfuhrungsleitung (61) aufweist.

9. Vorrichtung nach einem der Ansprüche 1 bis 8, dadurch gekennzeichnet, daß die Deckelplatte (116) mit einem Rohrstutzen (62) zum Anschluß der Wasserabführungsleitung (60) versehen ist, wobei der Rohrstutzen (62) das obere freie Ende eines durch die Deckelplatte (116) und durch die Deckelplatte (15) hindurchgeführten und bis in den Bereich der unteren Bodenplatte (14) reichenden Steigrohres (63) bildet, wobei das bodenplattenseitige Ende (64) des Steigrohres (63) mit einer Filtereinrichtung (65) versehen ist.

10. Vorrichtung nach Anspruch 9, dadurch gekennzeichnet, daß in dem Steigrohr (63) dieses unterteilend eine Pumpeneinrichtung (66) angeordnet ist.

11. Verwendung einer Sonde nach einem der vorangegangenen Ansprüche 1 bis 10 als Hauptelement eines Systems zur Erkundung und Sanierung von Altlasten bzw. verunreinigten Böden zur Zu- und Abführung bzw. Kreislaufführung von flüssigen oder gasförmigen Behandlungs- und/ oder Reinigungssubstanzen auf organischer, anorganischer oder mikrobiologischer Basis.

## Revendications

1. Dispositif (100) pour l'exploitation de sources de gaz de décharges de déchets et pour l'exploration et l'assainissement de pollutions anciennes et de sols pollués avec une sonde cylindrique creuse qui peut être introduite dans la zone gazeuse (203) de la décharge (200) et qui présente des découpures de paroi (13) servant d'orifices d'admission du gaz ainsi qu'une conduite d'évacuation du gaz (11) et dont le diamètre est supérieur au diamètre de la conduite d'évacuation du gaz qui lui est reliée de manière coaxiale et détachable, caractérisé en ce que le dispositif (100) présente un corps de sonde rigide à enfoncer par battage dans la surface de la décharge ou du sol (201) qui a la forme d'un récipient cylindrique creux en acier (10) dont la paroi d'enveloppe (12) est équipée des découpures (13) et que le récipient cylindrique creux en acier (10) est délimité, à une extrémité inférieure, par une plaque de fond (14) qui fait saillie radialement au-delà de sa paroi d'enveloppe (12) et qui est soudée à celle-ci sur la face et, à l'intérieur de l'extrémité supérieure du morceau de tube qui forme sa paroi d'enveloppe (12), par une plaque de couvercle (15) soudée dans le morceau de tube et que la plaque de couvercle (15) est équipée d'une tubulure (16) centrée pour le raccord de la conduite d'évacuation du gaz (11).

2. Dispositif selon la revendication 1, caractérisé en ce que la plaque de fond (14) est posée de manière amovible sur un arrangement (17) en forme de croix d'aciers plats (18) qui constituent des tocs de scarificateur, arrangement équipé d'un guidage centré (20).

3. Dispositif selon la revendication 1 ou 2, caractérisé en ce que le récipient cylindrique en acier (10) est pourvu, dans la zone du bord (12a) de sa paroi d'enveloppe (12) qui fait saillie axialement au-delà de la plaque de couvercle (15), de trous (21) qui servent à la prise par un dispositif d'extraction.

4. Dispositif selon l'une des revendications 1 à 3, caractérisé en ce que le récipient cylindrique creux en acier (10) peut être prolongé par un tube de poussée (30) qui peut être posé sur son extrémité supérieure et dont le diamètre est approximativement le même que celui du récipient en acier (10).

5. Dispositif selon la revendication 4, caractérisé en ce qu'il est prévu un guidage centré (31, 32) entre l'extrémité supérieure du récipient en acier (10) et le tube de poussée (30) qui est configuré de manière telle que le tube de poussée (30) est relié de manière clabotée au récipient en acier (10), lors de l'enfoncement par battage dans la décharge de déchets, mais qu'il se détache de celui-ci lorsqu'on le retire.

6. Dispositif selon l'une des revendications 1 à 5, caractérisé en ce que la conduite d'évacuation du gaz coaxiale avec le récipient en acier (10) et/ ou la tubulure (16) sont constitués par un tube en plastique résistant à la flexion (11), l'extrémité supérieure de la tubulure (16) pouvant être fermée par un couvercle (35) qui, en substance, empêche que du gaz ne s'échappe.

7. Dispositif selon l'une des revendications 1 à 6, caractérisé en ce que le récipient cylindrique en acier (10) présente, à l'intérieur de l'extrémité supérieure du morceau de tube qui forme sa paroi d'enveloppe (12), une autre plaque de couvercle (115) placée au-dessous des trous (21) qui présente un certain écart par rapport à la plaque de couvercle (15) et qui délimite un espace de travail (40), plaque (115) qui est traversée par la tubulure (16), des découpures étant formées dans la paroi d'enveloppe (12) dans l'espace de travail (40), découpures sur lesquelles sont placés des tubes (50) qui présentent une configuration en forme de L et qui ferment celles-ci par l'une de leurs extrémités (51), leur autre extrémité respective (52) étant tournée vers le bas et allant jusque dans la zone de la plaque de couvercle (15) et que la plaque de couvercle (115) est équipée d'une tubulure (116) pour le raccord d'une conduite forcée (111).

8. Dispositif selon l'une des revendications 1 à 7, caractérisé en ce que le récipient cylindrique creux en acier (10) présente une conduite d'évacuation d'eau (61).

9. Dispositif selon l'une des revendications 1 à 8, caractérisé en ce que la plaque de couvercle (116) est équipée d'une tubulure (62) pour le raccord de la conduite d'évacuation d'eau (60), la tubulure (62) formant l'extrémité libre supérieure d'une conduite montante (63) traversant la plaque de couvercle (116) et la plaque de couvercle (15) et s'étendant jusque dans la zone de la plaque de fond (14) inférieure, l'extrémité du côté du fond (64) de la conduite montante (63) étant équipée d'un dispositif de filtrage (65).

10. Dispositif selon la revendication 9, caractérisé en ce qu'un dispositif de pompage (66) est placé dans la conduite montante (63) en la compartimentant.

11. Utilisation d'une sonde selon l'une des revendications précédentes 1 à 10 comme élément principal d'un système d'exploration et d'assainissement de pollutions anciennes et/ou de sols pollués pour l'amenée et l'évacuation et/ou la circulation de substances de traitement et/ou de nettoyage liquides ou gazeuses à base organique, anorganique ou microbiologique.

## Claims

1. Apparatus (100) for opening up refuse dump gas sources and for the exploration and sanification of old dump site burdens and contaminated soils with a hollow cylindrical probe which is insertable into the gassy zone (203) of the dump (200), said probe being provided with wall perforations (13) serving as gas admission apertures as well as with a gas evacuation duct (11), the diameter of the probe being larger than the diameter of the probe body connected thereto, characterized in that the apparatus (100) is provided with a rigid probe body in the form of a hollow cylindrical steel cylinder (10) to be driven into the refuse dump or into the topsoil (201), the casing wall 17 of which is provided with the wall perforations (13), and in that the hollow cylindrical steel container (10), at one bottom end, is delimited by a bottom plate (14) which projects radially over its casing wall (12) welded on to the latter on the front end and, within the upper end of the length of pipe forming its casing wall (12), by a cover plate (15) welded into the same, and in that the cover plate (15) is provided with a concentric flanged socket (16) for connection to the gas evacuation duct (11).

2. Apparatus according to Claim 1, characterized in that the bottom plate (14) is detachably mounted on a radial arrangement (17) of flat steel bars (18) which form ripping projections (19), the radial arrangement being provided with a concentric guideway (20).

3. Apparatus according to Claim 1 or 2, characterized in that the cylindrical steel container (10), within the area of the rim (12a) of its casing wall (12) projecting axially over the cover plate (15), is provided with holes (21) serving for the engagement of a drawing means.

4. Apparatus according to any of the Claims 1 to 3, characterized in that the hollow cylindrical steel container (10) is extensible by means of a driving pipe (30) to be mounted on its upper end and which has roughly the same diameter as the steel container (10).

5. Apparatus according to Claim 4, characterized in that, between the upper end of the steel container (10) and the driving pipe (30), a concentric guideway (31, 32) is provided that is constructed in such a way that the driving pipe (39), when being driven into the refuse dump, is frictionally connected with the steel container (10), but, when being withdrawn, is detached from the latter.

6. Apparatus according to any of Claims 1 to 5, characterized in that the gas evacuation duct located coaxially relative to the steel container (10) and/or the flanged socket (16) consists (consist) of a flexurally rigid plastic pipe (11), while the upper end of the flanged socket (16) can be sealed by means of a cover (35) essentially preventing the escape of gas.

7. Apparatus according to Claims 1 to 6, characterized in that the hollow cylindrical steel container (10), within the upper end of the length of pipe forming its casing wall (12), is provided with an additional cover plate (115) located at a distance from the cover plate (15) and delimiting a working chamber (40) and disposed underneath the holes (21), the flanged socket (16) being passed through said cover plate (115), while in the working chamber (40), in the casing wall (12), perforations (113) are constructed, on which, in the working chamber (40), pipes (50) are arranged sealing the perforations (113) with one of their ends (51) and possessing an L-shaped configuration that seal said perforations with one of their ends 51, whose respective other end (52) is downwardly directed and passed as far as into the area of the cover plate (15), and in that the cover plate (115) is provided with a flanged socket (116) for the connection of a delivery pipe (111).

8. Apparatus according to any of the Claims 1 to 7, characterized in that the hollow cylindrical steel container (10) has a water evacuation pipe (61).

9. Apparatus according to any of the Claims 1 to 8, characterized in that the cover plate (115) is provided with a flanged socket (62) for connecting the water evacuation pipe (61), in which the flanged socket (62) forms the upper free end of a standpipe (63) passed through the cover plate (115) as well as through the cover plate (15) and extending as far as into the area of the lower bottom plate (14), the bottom side end (64) of the standpipe (63) being fitted with a filtering means (65).

10. Apparatus according to Claim 9, characterized in that, inside the standpipe (63), a pumping means (66) is disposed which subdivides the standpipe.

11. The use of a probe according to any of the preceding Claims 1 to 10 as the main element of a system for the exploration and sanification of old deposit site burdens or contaminated soils for the supply and removal or for the circulation control of liquid or gaseous treatment and/or purification substances on an organic, inorganic or microbiological basis.

FIG.1

Phase 1    Phase 2    Phase 3    Phase 4    Phase 5    Phase 6

EP 0 301 060 B1

FIG.2

FIG.3

## FIG.4

Schnitt A – A

## FIG.5

Schnitt B – B

## FIG.6

Schnitt C – C

## FIG.7

Schnitt D – D

FIG.8